# EUROPEAN PATENT SPECIFICATION

(11) **EP 3 955 023 B1**
(45) Date of publication and mention of the grant of the patent: **23.09.2026**
(21) Application number: 20190817.5
(22) Date of filing: 13.08.2020
(51) Int. Cl.: G01S 13/42, G01S 13/58, H01Q 3/22

(54) **METHOD AND DEVICE FOR EXTRACTING SPATIAL/VELOCITY RESOLUTION OF A SINGLE-INPUT SINGLE-OUTPUT RADAR**
VERFAHREN UND VORRICHTUNG ZUR EXTRAKTION DER RAUM/GESCHWINDIGKEITSAUFLÖSUNG EINES RADARS MIT EINZELEINGABE UND EINZELAUSGABE
PROCÉDÉ ET DISPOSITIF D'EXTRACTION DE LA RESOLUTION SPATIALE/DE LA VITESSE D'UN RADAR À UNE SEULE ENTRÉE ET UNE SEULE SORTIE

(43) Date of publication of application: 16.02.2022
(73) Proprietor: Stichting IMEC Nederland, 5656 AE Eindhoven (NL)
(72) Inventor: Hornung, Rainer Oliver, 3001 Leuven (BE); Zhang, Peng, 3001 Leuven (BE); Mercuri, Marco, 3001 Leuven (BE); Mateman, Paul, 3001 Leuven (BE); Yao, Lichen, 3001 Leuven (BE)
(74) Representative: Roth, Sebastian

(56) References cited:
- WO-A1-2020/006533
- US-A- 3 434 139
- US-A1- 2016 018 511
- US-A1- 2020 011 968

## Description

The invention relates to a method for extracting spatial resolution and/or velocity resolution of a single-input single-output radar acquiring raw radar data with a frequency scanning antenna (FSA) and a device for extracting spatial resolution and/or velocity resolution of a single-input single-output radar acquiring raw radar data with a frequency scanning antenna.

Generally, in times of an increasing number of several applications employing radar, there is a growing need of a method and a device for extracting spatial resolution and/or velocity resolution of a single-input single-output radar acquiring raw radar data with a frequency scanning antenna in order to provide range, angle, and doppler information in a highly efficient and accurate manner, thereby additionally ensuring low costs and low power consumption.

The document Y. Alvarez Lopez et al.: "Frequency scanning based radar system", Progress in Electromagnetics Research, January 2012, Vol. 132, pp. 275 - 296 relates to an imaging technique based on a frequency scanning antenna array. In this context, angular information in range-based radar system is provided. Furthermore, the corresponding method contains an exact and non-overlapping subdivision of the frequency scanning bandwidth in frequency windows, each one having associated an angular region of the reconstruction domain. Disadvantageously, due to said segmentation of the complete angular observation area, the angular resolution and range resolution are getting coarser. Further disadvantageously, in accordance with said imaging technique, a doppler generation or a velocity generation, respectively, is not possible.

US 3,434,139 A discloses a dual plane frequency-scanning, dual plane mono-pulse antenna. A matrix of radiating elements are arranged in rows and columns, each row being fed by a separate first pair of mutually phase-squinted feedlines. In addition to this, it is provided a second and a third pair of feedlines, the third pair being progressively phase-squinted relative to the second pair, a first and a second feedline of each of said feedline pairs being connected to a corresponding first and second feedline, respectively, of each of the first pairs of feedlines.

US 2016/0018511 A1 shows a cascaded radar system including a first radar system-on-a-chip (SOC) operable to perform an initial portion of signal processing for object detection on digital beat signals generated by multiple receive channels of the radar SOC, a second radar SOC operable to perform the initial portion of signal processing for object detection on digital beat signals generated by multiple receive channels in the radar SOC, and a processing unit coupled to the first radar SOC and the second radar SOC to receive results of the initial portion of signal processing from each radar SOC, the processing unit operable to perform a remaining portion of the signal processing for object detection using these results.

US 2020/0011968 A1 presents a method for obtaining an adaptive angle-Doppler ambiguity function (AF) for a target using multiple-input-multiple-output (MIMO) radar which includes a transmit antenna array having a plurality of antenna elements. The method includes generating transmit signals for transmission by the transmit antenna array, the transmit signals defining at least a first transmit trajectory of a phase center within the transmit antenna array; transmitting the transmit signals using the transmit antenna array and receiving receive signals from the target, the receive signals resulting from the incidence of the transmit signals upon the target; and obtaining at least an angle-Doppler ambiguity function (AF) from the receive signals. The first transmit trajectory is such that, in operation, the phase center undergoes random phase center motion (PCM), such that a phase center position within the transmit antenna array varies randomly with time.

WO 2020/006533 A1 shows a radar data acquisition circuit comprising a radar receiver to receive radar data representing a radar scene in response to a sequence of extended sampling waveform frames that includes multiple sampling waveform subframes; and a first processor; configured with stored program instructions to generate one or more replacement sampling waveform subframes to include in an extended sampling waveform frame of the sequence based at least in part upon one or more radar parameters of radar data received using the sequence of extended sampling waveform frames.

Accordingly, there is an object to provide a method for extracting spatial resolution and/or velocity resolution of a single-input single-output radar acquiring raw radar data with a frequency scanning antenna and a device for extracting spatial resolution and/or velocity resolution of a single-input single-output radar acquiring raw radar data with a frequency scanning antenna, which provide range, angle, and doppler information in a highly efficient and accurate manner, whereby low costs and low power consumption are additionally ensured.

This object is solved by the features of the first independent claim 1 for a method for extracting spatial resolution and/or velocity resolution of a single-input single-output radar acquiring raw radar data with a frequency scanning antenna and the features of the second independent claim 8 for a device for extracting spatial resolution and/or velocity resolution of a single-input single-output radar acquiring raw radar data with a frequency scanning antenna. The dependent claims contain further developments.

According to a first aspect of the invention, a method for extracting spatial resolution and/or velocity resolution of a single-input single-output radar acquiring raw radar data with a frequency scanning antenna is provided. Said method comprises the steps of steering a radar beam with the aid of the frequency scanning antenna with respect to an area to be illuminated by the radar, and dividing the area into at least two angular sectors. In this context, the at least two angular sectors are configured in a manner that the at
least two angular sectors overlap with respect to each other. Advantageously, range, angle, and doppler information can be provided in a highly efficient and accurate manner. Further advantageously, low costs and low power consumption are additionally ensured. With respect to the frequency scanning antenna, it is noted that the frequency scanning antenna may comprise or be a frequency scanning array or a frequency scanning antenna array. Said frequency scanning array or frequency scanning antenna array, respectively, may also be called frequency-scan array or frequency-scan antenna array, respectively.

According to a first preferred implementation form of the first aspect of the invention, for steering the radar beam with the aid of the frequency scanning antenna, the method comprises the step of varying the respective excitation frequency. Advantageously, for instance, beam steering can be achieved without active components such as tunable delays or phase shifters. In this context, it is noted that said beam steering may preferably be performed with the aid of at least one fixed delay line.

Further advantageously, especially with respect to the frequency scanning antenna, it is noted that said frequency scanning antenna may comprise an array of antenna elements. In this context, the respective phase shifting may be provided by the corresponding transmission line, preferably by the at least one fixed delay line, which may especially be configured to connect the respective elements. Accordingly, the respective beam steering may be frequency dependent.

According to a second preferred implementation form of the first aspect of the invention, the method comprises the step of generating a raw data slice comprising the raw radar data on the basis of the at least two angular sectors. Advantageously, for example, complexity can be reduced, which leads to an increased efficiency.

According to a further preferred implementation form of the first aspect of the invention, the raw data slice comprises or is a two-dimensional matrix. Additionally, or alternatively, the raw data slice represents a respective coherent processing interval. In further addition to this or as a further alternative, the raw data slice comprises or is a slow-time and fast-time matrix. Advantageously, for instance, simplicity can be increased, thereby reducing inefficiencies.

According to a further preferred implementation form of the first aspect of the invention, the method comprises the step of generating a raw data cube on the basis of the raw data slice especially by copying the raw data slice at least once and stacking the raw data slice and the at least one copy thereof together in order to form the raw data cube. Advantageously, for example, said raw data cube can ensure or facilitate compatibility with respect to other methods or systems.

According to a further preferred implementation form of the first aspect of the invention, the method comprises the step of generating a radar data cube on the basis of the raw data slice or the raw data cube especially by applying at least one window function and/or at least one frequency transform, preferably at least one Fast Fourier Transform, to the raw data slice or the raw data cube. Advantageously, for instance, accuracy can be increased in an efficient manner.

According to a further preferred implementation form of the first aspect of the invention, the method comprises the step of applying at least one angular window function to at least one, preferably each, of the at least two angular sectors especially such that the corresponding angular window function matching the respective angle of arrival of a corresponding radar target yields the strongest respective magnitude preferably in the raw radar data. Advantageously, for example, with the aid of the at least one angular window, a mapping between the position of the highest magnitude in raw data and the at least two angular sectors in physical space can be realized in an efficient and accurate manner.

According to a further preferred implementation form of the first aspect of the invention, the method comprises the step of deriving the at least one angular window function from the corresponding radiation pattern of the frequency scanning antenna. Advantageously, for instance, said radiation pattern can efficiently be retrieved on the basis of the corresponding mid-angels of each of the at least two angular sectors.

Further advantageously, the respective mid-angel(s) of at least one, preferably each, of the at least two angular sectors may determine the corresponding beam directions. Additionally or alternatively, the respective mid-angel(s) of at least one, preferably each, of the at least two angular sectors may determine the corresponding excitation frequencies of the frequency scanning antenna. Furthermore, based on these frequencies, the respective appropriate radiation pattern may be calculated preferably with the aid of a radio frequency simulation unit.

According to a second aspect of the invention, a device for extracting spatial resolution and/or velocity resolution of a single-input single-output radar acquiring raw radar data with a frequency scanning antenna is provided. Said device comprises an interface being connectable to the single-input single-output radar with the frequency scanning antenna, and a control unit connected to the interface. In this context, the control unit is configured to steer a radar beam with the aid of the frequency scanning antenna with respect to an area to be illuminated by the radar, wherein the control unit is configured to divide the area into at least two angular sectors. In addition to this, the at least two angular sectors are configured in a manner that the at least two angular sectors overlap with respect to each other. Advantageously, range, angle, and doppler information can be provided in a highly efficient and accurate manner. Further advantageously, low costs and low power consumption are additionally ensured.

According to a first preferred implementation form of the second aspect of the invention, for steering the radar beam with the aid of the frequency scanning antenna, the control unit is configured to vary the respective excitation frequency. Advantageously, for instance, beam steering can be achieved without active components such as tunable delays or phase shifters. In this context, it is noted that said beam steering may preferably be performed with the aid of at least one fixed delay line.

Further advantageously, especially with respect to the frequency scanning antenna, it is noted that said frequency scanning antenna may comprise an array of antenna elements. In this context, the respective phase shifting may be provided by the corresponding transmission line, preferably by the at least one fixed delay line, which may especially be configured to connect the respective elements. Accordingly, the respective beam steering may be frequency dependent.

According to a second preferred implementation form of the second aspect of the invention, the control unit is configured to generate a raw data slice comprising the raw radar data on the basis of the at least two angular sectors. Advantageously, for example, complexity can be reduced, which leads to an increased efficiency.

According to a further preferred implementation form of the second aspect of the invention, the raw data slice comprises or is a two-dimensional matrix. Additionally, or alternatively, the raw data slice represents a respective coherent processing interval. In further addition to this or as a further alternative, the raw data slice comprises or is a slow-time and fast-time matrix. Advantageously, for instance, simplicity can be increased, thereby reducing inefficiencies.

According to a further preferred implementation form of the second aspect of the invention, the control unit is configured to generate a raw data cube on the basis of the raw data slice especially by copying the raw data slice at least once and stacking the raw data slice and the at least one copy thereof together in order to form the raw data cube. Advantageously, for example, said raw data cube can ensure or facilitate compatibility with respect to other methods or systems.

According to a further preferred implementation form of the second aspect of the invention, the control unit is configured to generate a radar data cube on the basis of the raw data slice or the raw data cube especially by applying at least one window function and/or at least one frequency transform, preferably at least one Fast Fourier Transform, to the raw data slice or the raw data cube. Advantageously, for instance, accuracy can be increased in an efficient manner.

According to a further preferred implementation form of the second aspect of the invention, the control unit is configured to apply at least one angular window function to at least one, preferably each, of the at least two angular sectors especially such that the corresponding angular window function matching the respective angle of arrival of a corresponding radar target yields the strongest respective magnitude preferably in the raw radar data. Advantageously, for example, with the aid of the at least one angular window, a mapping between the position of the highest magnitude in raw data and the at least two angular sectors in physical space can be realized in an efficient and accurate manner.

According to a further preferred implementation form of the second aspect of the invention, the control unit is configured to derive the at least one angular window function from the corresponding radiation pattern of the frequency scanning antenna. Advantageously, for instance, said radiation pattern can efficiently be retrieved on the basis of the corresponding mid-angels of each of the at least two angular sectors.

Further advantageously, the respective mid-angel(s) of at least one, preferably each, of the at least two angular sectors may determine the corresponding beam directions. Additionally or alternatively, the respective mid-angel(s) of at least one, preferably each, of the at least two angular sectors may determine the corresponding excitation frequencies of the frequency scanning antenna. Furthermore, based on these frequencies, the respective appropriate radiation pattern may be calculated preferably with the aid of a radio frequency simulation unit.

Exemplary embodiments of the invention are now further explained with respect to the drawings by way of example only, and not for limitation. In the drawings:
- Fig. 1: illustrates the working principle of radar with a frequency scanning antenna;
- Fig. 2: shows an exemplary radiation pattern of a frequency scanning antenna as a function of both angle and frequency;
- Fig. 3A: depicts an exemplary normalized baseband signal with a single point target, wherein the respective window is centered at the target's angle of arrival;
- Fig. 3B: illustrates an exemplary normalized baseband signal with a single point target, wherein the respective window is centered at another angular sector than the target's angle of arrival;
- Fig. 4A: shows an exemplary range-doppler profile (2D-FFT) after windowing with respect to Fig. 3A;
- Fig. 4B: shows an exemplary range-doppler profile (2D-FFT) after windowing with respect to Fig. 3B;
- Fig. 5: depicts an exemplary angle profile in the range-doppler domain;
- Fig. 6: illustrates an exemplary block diagram of the inventive signal processing chain especially for generating the radar data cube;
- Fig. 7: shows exemplary angular windows especially derived from the respective antenna pattern;
- Fig. 8: shows an exemplary angular window especially overlaid with the respective appropriate antenna pattern;
- Fig. 9: shows a flow chart of an exemplary embodiment of the first aspect of the invention; and
- Fig. 10: shows an exemplary embodiment of an inventive device.

Before the above-mentioned figures will be explained in greater detail, some background information within the scope of the invention is given in the following.

Generally, a radar (radio detection and ranging) uses electromagnetic waves to determine spatial information of objects, like range, angle, and velocity. These systems are used in the past, mainly for space and defense applications. Due to the technological progress of recent years, radars are going to be used in the future in other applications like building automation, drones, HVAC (heating, ventilation, air conditioning), smart home accessories such as smart speakers, etc. In these applications, the radars are used for continuous occupancy awareness, distance measurement, people tracking, and behavioral classification.

Radars have, in comparison to traditional sensors, like cameras, ultra-sonic, and passive infrared sensors (PIR) several advantages. In contrast to cameras, they are preserving privacy, and they are robust against ambient lighting conditions. Radar can detect smaller movements over a longer distance than standard PIR. Therefore, for instance, the disadvantage of PIR can be overcome, based on people's micro motions (vital signs: breathing and heart rate) as a radar can detect one or multiple still sitting people in a room. Vital sign detection can be used for the health monitoring of drivers and elderly people. By detecting tiny motions, emergencies like apnea, irregular heart rate, or sudden infant death can be identified. Radars can advantageously be used in a contactless manner; thus, no interaction with the people is needed.

For tracking, detection, and counting of people, a radar with a spatial (range, angle) and speed resolution are needed. In general, an angular resolution is achieved by a beam steering of the emitted or received electromagnetic signal. Therefore, different principles are known and used. One principle is the MIMO (multiple-input multiple-output) radar, where multiple transmitters are emitting signals via multiple antennas. These are reflected by an object and received by multiple antennas and their belonging receivers. Algorithms do the beam steering in the digital post-processing. Another principle is the phased array antenna, which also uses multiple receive and transmit antennas. A complex radio frequency front-end, mainly based on phase shifters, is used. In this case, the beam steering is done electrically by phase-shifting the feeding lines of the antennas.

The previously mentioned principles are costly and power-consuming because multiple front ends and multiple antennas are required. In cost and power-sensitive applications, radars that use SISO (single-input single-output) become more interesting because the required number of components is minimized. The usage of just one transmitter and receiver reduces the power consumption of the analog front-end and the required chip size.

Therefore, this principle creates the opportunity to deploy radars in a high amount and long-term battery powered for big scale applications. The disadvantage, though with the SISO radar, is its incompetence to direction-finding. Most antennas have a fixed radiation pattern; thus, no spatial diversity can be provided. An alternative is physically rotating the antenna such that the main beam illuminates different angular sectors. Algorithms for super-resolution direction finding for such systems are available, but moving mechanical components are unappreciated due to its mechanical complexity and scanning speed.

In order to avoid these drawbacks, the invention employs a frequency scanning antenna (FSA), which can especially steer the beam direction electrically preferably by varying the excitation frequency. In this context, it is noted that two antennas can be used, especially with a diplexer, whereas a reduction to one antenna is still possible and preferably described within the scope of the invention.

With the aid of the invention, one can detect and track moving objects. For this reason, joint estimation algorithms to extract range, angle, and doppler (velocity) simultaneously are used. The invention addresses and solves especially three major failings to overcome, which are described in the following.

The first failing to overcome being solved by the invention is the development of a signal processing framework for joint angle and range-velocity estimation. Radars are already developed for almost one century. Therefore, a systematic way of implementation of radar algorithms has been established. Typically, radar raw data are organized in multidimensional matrixes called radar cube or radar data cube. For this data format are already a wide variety of algorithms available. Accordingly, generating such a radar cube makes the invention particularly efficient because any further processing can be done with algorithms being already available.

Thus, the second failing to overcome which is solved by the invention is the creation of a radar cube or radar data cube, respectively, in order to provide a generic interface for higher-level applications. Furthermore, the third failing to overcome being solved is to increase the angular and range resolution of a SISO radar with an FSA, especially achieved by the algorithm of the signal processing chain. This is solved for a SISO radar with an FSA and is especially achieved through the usage of overlapping angular windows in the signal processing chain. Additionally or alternatively, another failing to overcome being solved is to reduce the respective computational effort of the angular estimation through finding the optimum tradeoff between angular and range resolution of a SISO radar with a FSA, especially achieved by the inventive method with respect to the corresponding signal processing chain.

In addition to this, as a further advantage, within the scope of the invention, there are shown different possibilities of optimization, which are also marked in the text with the word optimization. It is noted that these optimizations may especially be useful for a signal processing chain implementation into dedicated hardware blocks of an SoC (system on chip), for instance, to unload a microprocessor and to accelerate the data execution.

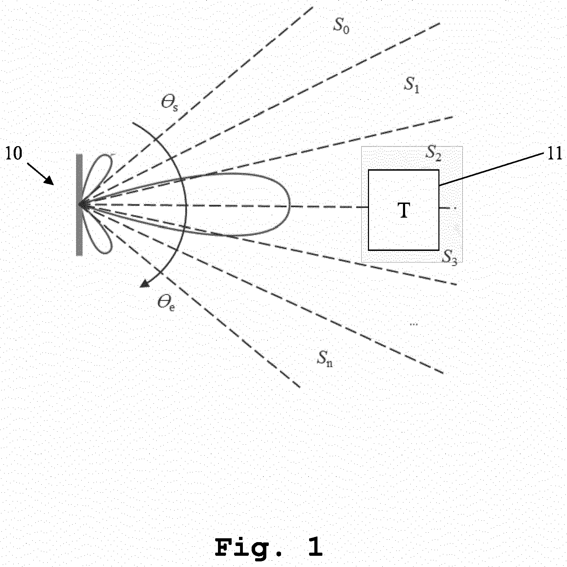

Now, with respect to the figures, the working principle of a SISO radar with an FSA 10 is exemplary depicted in Fig. 1. The beam is rotating from the starting angle ***θₛ*** to the end angle ***θₑ*** and illuminating a target 11 such as a person. The complete angular coverage area is divided into ***n*** several angular sectors *Sₙ***.**

Especially in order to elaborate on the solution, a respective signal model should be introduced. A sawtooth FMCW (frequency modulated continuous wave) chirp with normalized power ***s*(*t*)** can be expressed as: $s \left(t\right) = cos \left(2{πf}_{c}t+2π\frac{μ}{2}{t}^{2}\right) , 0 < t < {T}_{c} ,$
wherein ***f_{c}*** denotes the starting carrier frequency,
wherein ***µ*** denotes the frequency slope, and
wherein ***T_{c}*** denotes the chirp duration.

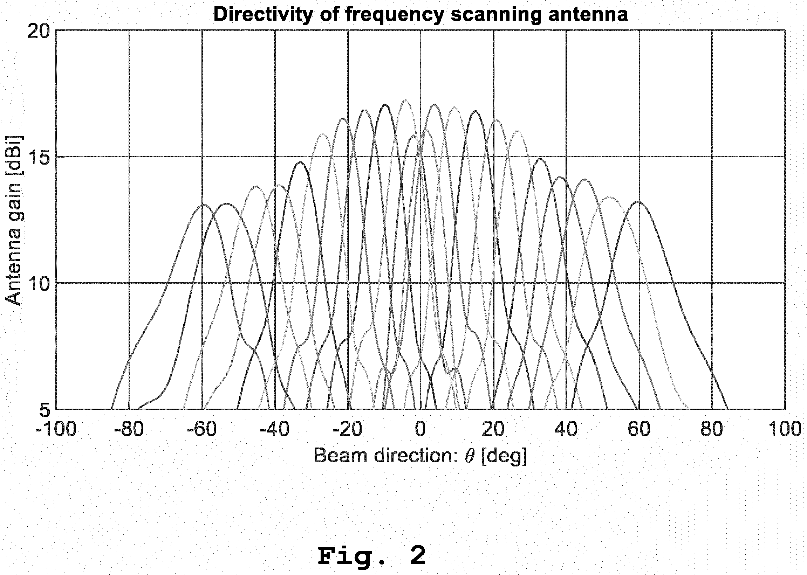

The antenna radiation pattern of the FSA is modeled as a frequency-dependent function *A*(*θ,f*), exemplarily see Fig. 2. Frequency ***f*** is a linear function of time ***t***: $f \left(t\right) = {f}_{c} + μt .$

Thus, the radiation pattern effectively is a function of time, as ***A*(*θ,t*)**. Especially to establish the following equations, it is assumed that the targets are point targets, and there is no background reflection. Starting from a single target case, wherein the target is ***d*** meters away, moving at *v* m/s along the radial direction and at *θₜ* degrees, then the received signal is: $r \left(t\right) = {a}_{L} {A}^{2} \left({θ}_{t}, t\right) cos \left(2{πf}_{c}\left(t-τ\right)+πμ{\left(t-τ\right)}^{2}+2{πf}_{d}t\right) .$

In this context, ***a_{L}*** denotes the loss term including gains in processing chain and path loss, ***τ** =* 2*d*/*c* denotes the time delay especially due to the round trip, ***f_{d} =* 2*v*/*λ*** denotes the doppler frequency, and ***λ*** denotes the wavelength. It is noted that the square is especially there for radiation pattern because we use the same antenna for transmission and reception. As a result, the amplitude of the received signal is maximized when the direction of the main beam at ***f = f_{c} + µt*** is at an angle ***θₜ.***

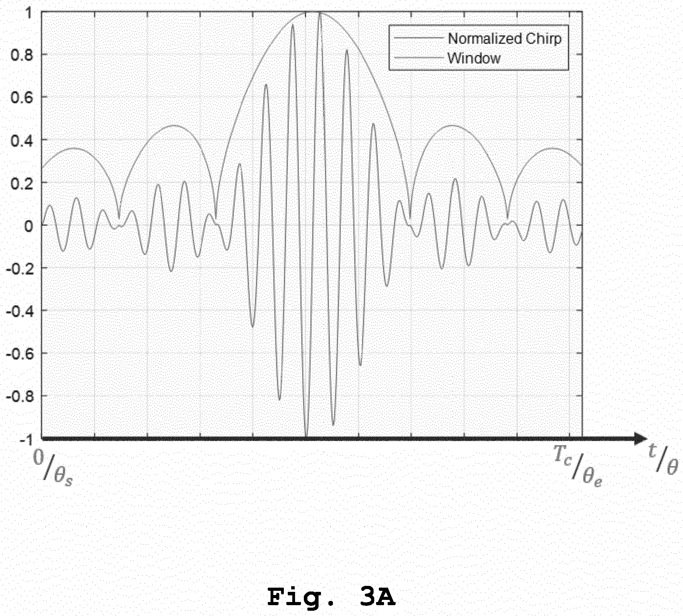

During the other periods in the chirp, the target is illuminated by sidelobes, thus yielding low amplitude in the receiver. As a result, as the main beam of the FSA scans different angles, the variation of the respective received amplitude during a chirp may especially be seen. The scanned angle that corresponds to the maximum in the received amplitude may especially be the target's angle of arrival (AoA), exemplarily see the normalized chirp in Fig. 3A.

It is noted that the transmitted signal does especially not have a uniform amplitude, because the antenna gain varies over frequency (see Fig. 2). But in practice, the amplitude variation in indoor environments may not be visible because background reflections are mainly dominant. The final received signal would be a superposition of multiple similar waveforms with different angles of arrival, phase, and magnitude. The objects in the background also give strong reflection back to the receiver. As a result, the raw amplitude of received chirps can especially not provide angular information.

However, velocity information should allow for separate moving targets and static environment. The portions of a chirp at the vicinity of angles at which targets are located especially comprise the targets' range and velocity information while the other portions do especially not.

Firstly, these portions of chirp that comprise targets' information are extracted especially by applying window functions. These window functions are called in the following angular windows, which also especially suppresses the frequency leakage of the FFT (Fast Fourier Transform).

It is noted that the choice (type, length) of the angular window is not limited to what is described below. As already illustrated by Fig. 1, the complete coverage area is divided into several angular sectors ***Sₙ**,* wherein each ***Sₙ*** is preferably associated to an angular window ***Wₙ**.* As a starting point, the following definition of ***Wₙ*** is used; later in this document, variations thereof may especially be introduced.

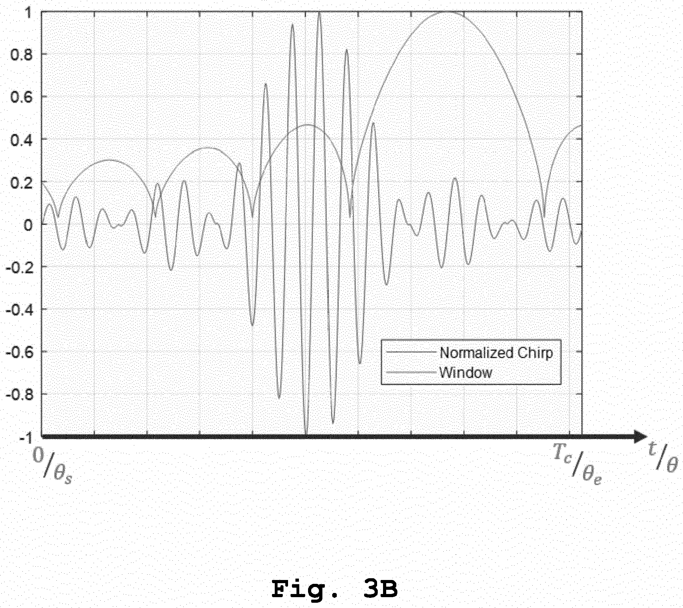

The ***n - th*** angular window function ***Wₙ*** is this defined by the radiation pattern of the respective FSA in the azimuth plane: ${W}_{n} \left(θ\right) = {A}^{2} \left(θ, {t}_{n}\right) , {θ}_{s} < θ < {θ}_{e} ,$ wherein ***θₛ*** and ***θₑ*** are the starting and ending angles scanned by the FSA. At ***tₙ*** which corresponds to the instantaneous carrier frequency ***fₙ*,** the antenna pattern is steered at an angle ***θₙ.*** The window is scaled proportionally to fit between ***θₛ*** and ***θₑ***. For the simulation results in Fig. 3A or Fig. 3B, respectively, a point target is considered, and only in Fig. 3A, the window is centered at the AoA of the respective target. After windowing, the portion that comprises the target information is preferably preserved.

If the angular window ***Wᵢ*** of the corresponding angular sector ***Sᵢ*** is applied on a target, which is in another angular sector ***Sⱼ*,** the target will especially be suppressed, as exemplarily depicted in Fig. 3B. The range-doppler processing of two cases will especially exhibit different magnitudes. The angular window that matches the actual AoA will preferably yield the strongest range-doppler magnitude.

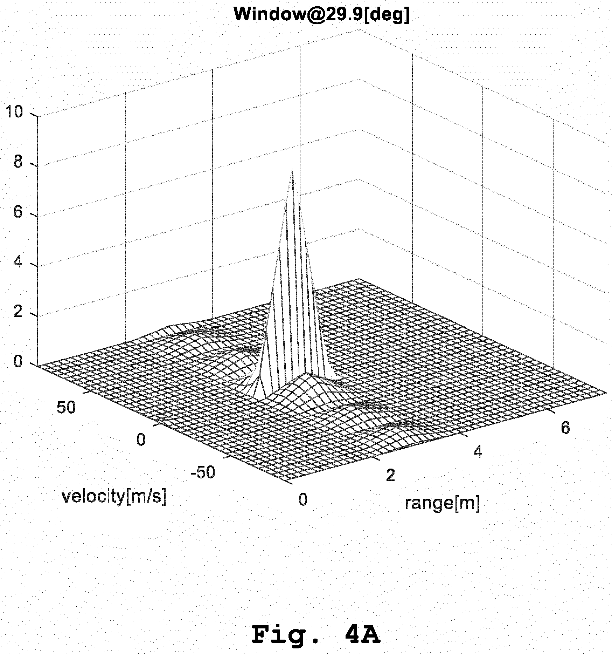

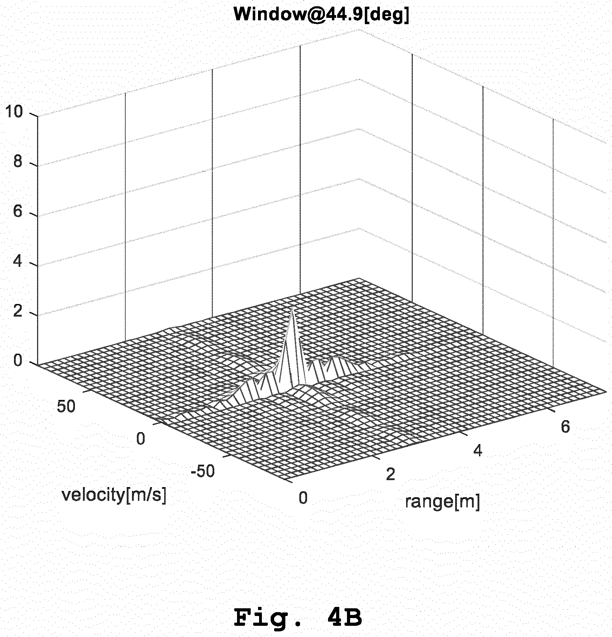

Furthermore, Fig. 4A and Fig. 4B show the respective range-doppler profile after applying the angular windows in Fig. 3A or Fig. 3B, respectively. Applying a selection of ***N*** angular windows that are especially centered at discrete different angles preferably gives ***N*** copies of the time domain signal with different portions of a chirp extracted.

The height of the range-doppler peak corresponding to the target especially varies according to the alignment between the angular window center angle and target's AoA. If the respective vector is extracted from the radar cube that corresponds to the target's range-doppler bin, a variation as a function of angle may especially be seen.

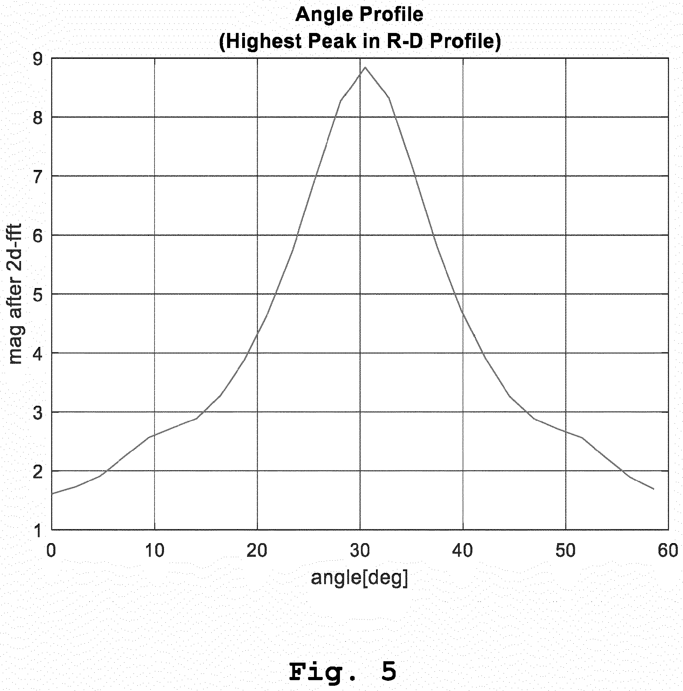

This variation is called angle profile. The angle profile of the example shown above is exemplarily illustrated by Fig. 5, wherein the windows are especially separated by about **2.5 *deg*** from each other. A clear peak is observed at ***30deg,*** which is exactly the target's AoA.

As already discussed above, there are three major failings to overcome being solved by the invention. One of these failings to overcome especially comprises establishing a signal processing chain of the SISO radar with an FSA.

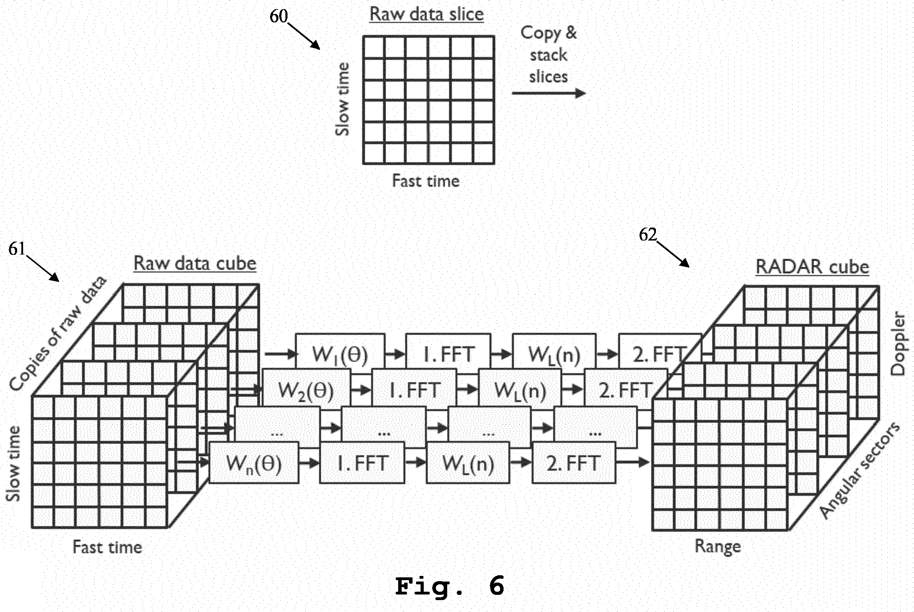

In accordance with Fig. 6, an exemplary embodiment of an inventive signal processing chain for generating the inventive radar cube is depicted. On the top of said Fig. 6, there are the raw data arranged in a two-dimensional matrix 60, which especially represents a coherent processing interval.

This slice 60 is copied n times into the three-dimensional raw data cube 61. After this step, the angular windows ***Wₙ*(*θ*),** the range (1.) FFTs, the frequency leakage windows ***W*_{L}(*n*)** and the doppler (2.) FFTs are applied on every slice.

Generally it might be particularly advantageous if with respect to the raw data slice, at least one of a window function, preferably an
angular window function, a first frequency transform, preferably a frequency transform regarding range, a leakage window function, preferably a frequency leakage window function, a second frequency transform, preferably a frequency transform regarding doppler, or any combination thereof is applied.

Another of the above-mentioned major three failings to overcome comprise creating the radar cube 62 or radar data cube, respectively. Especially due to the generation of the raw data cube 61 and applying the above-mentioned steps especially on every slice, the result is by its own nature a radar cube such as the radar cube 62 with range, doppler, and angular sector. By the way, it is noted that the difference especially is that for a MIMO radar, the third dimension may especially represent antenna elements that are separated in space.

It is further noted that the radar cube generation described above can be optimized exemplarily for implementation in the digital hardware of an SoC. In this context, the first step, copying the raw data slice and creating a raw data cube, can preferably be skipped; the radar cube can directly be calculated based on the raw data slice. For the sake of completeness, it is noted that the raw data cube would require more memory. Thus, more physical space on the silicon of an SoC and more energy may be needed. Furthermore, the data copying process may require more energy.

In the following, an inventive method is described, how to derive angular windows from the radiation pattern of the FSA. In this context, it is noted that there may be a tradeoff between angular resolution and range resolution.

The general cause of the respective one of the major three failings to overcome may especially be that narrow angular windows are resulting in a lower effective bandwidth ***BW*** of the FMCW chirp, which is analyzed by the signal processing chain.

Therefore, the target will be virtually 'illuminated' by less ***BW*** and the range resolution ***dres*** increases and is getting coarser. With the speed of light ***c*** = **299792458 *m*/*s,*** the range resolution can be calculated as: $dres = \frac{c}{2 B} .$

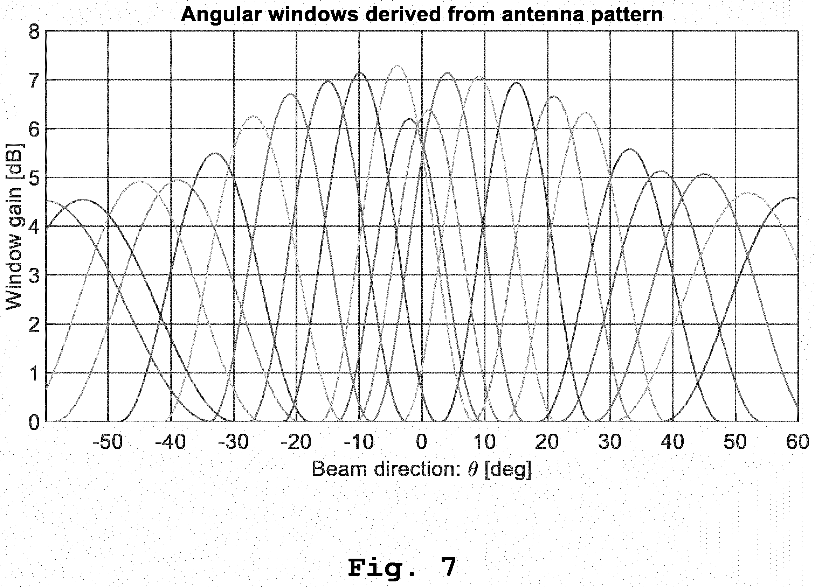

Especially for increasing the angular and range resolution at the same time in order to solve the above-mentioned respective one of the three major failings to overcome, overlapping instead of 'into exact areas dividing' windows should be used. Inventively, the angular windows are in an overlapping manner as exemplarily illustrated by Fig. 7.

Said inventive method having multiple implementation advantages comprises at least one of the following steps.

Said method may comprise the step of defining the required number ***n*** of angular sectors ***Sₙ*** (exemplarily see Fig. 1).

In this context, it is noted that it might be particularly advantageous if the minimum requirement for the number n of angular sector is: $n = {θ}_{FSA} / {θ}_{HPBW} ,$ wherein ***θ_{FSA}*** denotes the respective angular coverage range of the FSA (exemplarily see Fig. 2; -60 deg to 60 deg), and wherein ***θ_{HPBW}*** denotes the beam width of the FSA at ***θ*** = 0 deg (exemplarily see Fig. 2; similar to the middle antenna patterns). In this context, it is noted that ***θ_{HPBW}*** may especially be the 3dB-, 5dB- or another beam width.

In addition to this, the optimum requirement for ***n*,** especially to avoid degradation in angular resolution, may preferably be: $n \geq 2 ⋅ {θ}_{FSA} / {θ}_{HPBW} .$

It is further noted that it might be particularly advantageous if said number of angular sectors is equal to the number angular windows. Furthermore, the method may comprise the step of retrieving the FSA radiation pattern ***A*(*θ_{m,}tₙ*)** especially based on the mid-angels ***θₘ*** of each ***Sₙ*.**

Moreover, the method may comprise the step of creating a new angular window function especially based on standard window functions (for instance, a Hann window, a Hamming window, etc., or a combination thereof) and preferably aligning it with the FSA radiation pattern ***A*(*θ_{m,}tₙ*)** in position (***θₘ, tₙ***), beam width ***θ_{HPBW}*** and height (***Â*(*θₘ*,*tₙ*)**)*.* Generally, as an alternative, it is noted that it might be particularly advantageous if said alignment is done on the basis of at least one of the foregoing list or any combination thereof.

Furthermore, examples of angular windows are depicted in Fig. 7. These are exemplarily derived from the antenna pattern of Fig. 2. In this context, for instance, a 3dB beam width has been chosen for the respective alignment.

For the first step of the above-mentioned inventive method, the following tradeoffs may be important, when the number ***n*** of angular windows ***Wₙ*** or sectors ***Sₙ*** will be defined. Typically, the more angular windows are defined, the higher the computational effort for the signal processing chain will be.

In the second step of the above-mentioned method, the radiation patterns ***A*(*θₘ,tₙ*)** of the FSA should be generated. Based on the number ***n*** of the angular sectors ***Sₙ*** and the complete angular coverage area (***θₛ*** to ***θₑ***, exemplarily see Fig. 1), the mid-angels ***θₘ*** of each ***Sₙ*** are defined. With ***θₘ***, the radiation patterns ***A*(*θ_{m,}tₙ*)** of the FSA are generated preferably via an antenna simulation.

In the third step, especially as angular windows ***Wₙ*(*θ*),** there may be used window functions like Hann, Hamming, Blackman Harris, etc., or any combination thereof. This may especially have the advantage to have full control over the frequency leakage especially instead of just using the antenna pattern ***A*(*θ_{m,}tₙ*)*.***

Therefore, the angular windows should be aligned in position $\hat{{W}_{n}} \left(θ\right) = \hat{A} \left({θ}_{m}, {t}_{n}\right)$ and in beam width ***Wₙ*(*θ_{HPBW}*) *= A*(*θ_{HPBW,}tₙ*)*.*** The alignment at the 3dB-, 5dB- or another beam width preferably determines the width of the resulting angular window and thus the amount of overlapping between the angular windows.

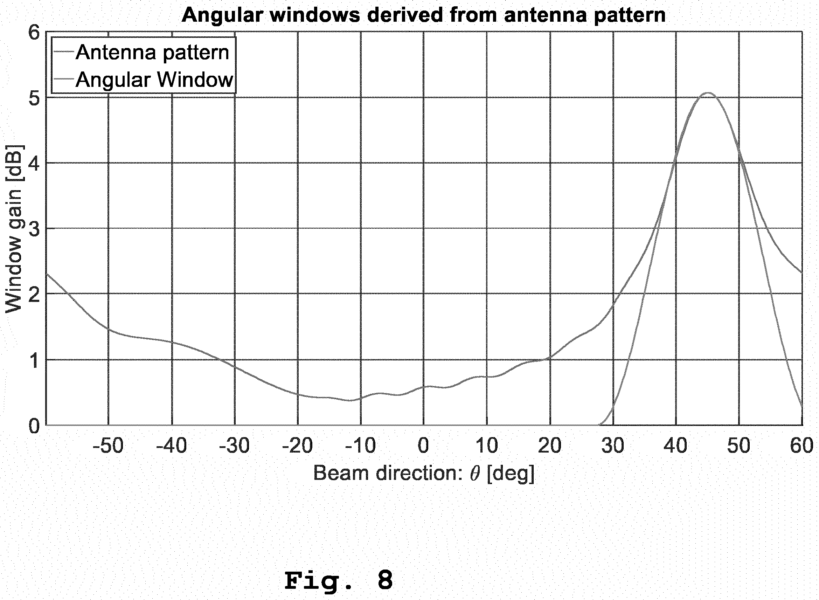

A corresponding example is illustrated by Fig. 8 showing one angular window overlaid with the appropriate antenna pattern. In this context, the antenna pattern exemplarily derives an angular window at 45 Deg beam direction. Therefore, the 3dB beam width is chosen.

In the following, an optimization especially for the implementation of a signal processing method into an SoC is described. In this context, it is noted that the approach with angular windows has multiple advantages. In general, a lot of unused data can be discarded. This reduces the total number of mathematical operations, which saves production costs for the implementation of less digital calculation and memory blocks. Furthermore, less mathematical operations are consuming less energy.

In the present example, the complete angular range (-60 deg ≥ ***θ*** ≥ 60 deg) is internally sampled in the radar by an ADC (analog-to-digital converter) and converted in a 1024 element long data vector. After this raw data is multiplied with an angular window (exemplarily see Fig. 8), circa 75% of the resulting data is filled with zeros. This result can especially be treated as a zero-padded signal. The number of frequency bins increases but not the range resolution. Therefore, the zeros can be removed, and the number of mathematical operations can be reduced.

Advantageously, in accordance with the invention, it is to be pointed out that the SISO radar with FSA and the introduced signal processing method is creating a low cost and low power principle, which provides range, angle, and doppler information. The SISO RADAR, as well as the FSA, has in comparison to MIMO and phased array antenna principles low complexity and thus less components.

It is further noted the invention may preferably be used for or in the context of smart home, smart building, health, HVAC (heating, ventilation, air conditioning), drone applications, or any combination thereof. With respect to smart home applications, it is noted that the invention may exemplarily be used in a smart assistant especially for people classification.

With respect to smart building applications, a control especially based on occupancy detection may exemplarily be realized with the aid of the invention. In addition to this or as an alternative, a dynamic employee guidance especially for flexible workspaces can exemplarily be realized. With respect to health applications, drivers monitoring, and/or elderly people surveillance can exemplarily be realized with the aid of the invention.

With respect to HVAC applications, the invention can exemplarily be used on smart demand control, for instance, based on occupancy detection of meeting rooms or the like.

With respect to drone applications, a remote navigation especially for guided landing can exemplarily be realized with the aid of the invention.

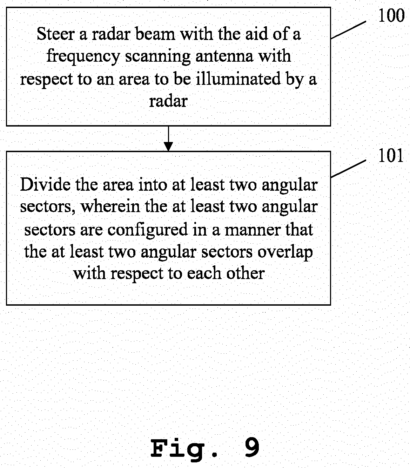

Now, with respect to Fig. 9, a flow chart of an exemplary embodiment of the inventive method for extracting spatial resolution and/or velocity resolution of a single-input single-output radar acquiring raw radar data with a frequency scanning antenna is shown. In a first step 100, a radar beam is steered with the aid of the frequency scanning antenna with respect to an area to be illuminated by the radar. Then, in a second step 101, the area is divided into at least two angular sectors. In this context, the at least two angular sectors are configured in a manner that the at least two angular sectors overlap with respect to each other.

It is noted that it might be particularly advantageous if for steering the radar beam with the aid of the frequency scanning antenna, the method comprises the step of varying the respective excitation frequency. It is further noted that the method may especially comprise the step of generating a raw data slice comprising the raw radar data on the basis of the at least two angular sectors.

With respect to said raw data slice, it is noted that the raw data slice may comprise or be a two-dimensional matrix. In addition to this or as an alternative, the raw data slice may represent a respective coherent processing interval. Further additionally or further alternatively, the raw data slice may comprise or be a slow-time and fast-time matrix.

Furthermore, the method may comprise the step of generating a raw data cube on the basis of the raw data slice especially by copying the raw data slice at least once and stacking the raw data slice and the at least one copy thereof together in order to form the raw data cube.

Moreover, it might be particularly advantageous if the method comprises the step of generating a radar data cube on the basis of the raw data slice or the raw data cube especially by applying at least one window function and/or at least one frequency transform, preferably at least one Fast Fourier Transform, to the raw data slice or the raw data cube.

Additionally or alternatively, the method may comprise the step of applying at least one angular window function to at least one, preferably each, of the at least two angular sectors especially such that the corresponding angular window function matching the respective angle of arrival of a corresponding radar target yields the strongest respective magnitude preferably in the raw radar data. In this context, it might be particularly advantageous if the method comprises the step of deriving the at least one angular window function from the corresponding radiation pattern of the frequency scanning antenna.

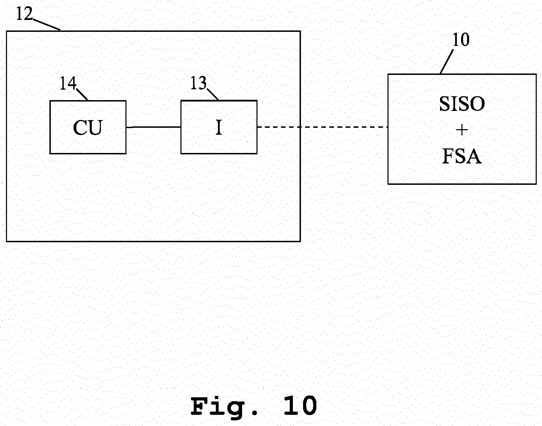

Finally, Fig. 10 shows an exemplary block diagram of an inventive device 12 for extracting spatial resolution and/or velocity resolution of a single-input single-output radar acquiring raw radar data with a frequency scanning antenna 10.

According to Fig. 10, said device 12 comprises an interface 13 being connectable to the single-input single-output radar with the frequency scanning antenna 10, and a control unit 14 connected to the interface 13.

In this context, the control unit 14 is configured to steer a radar beam with the aid of the frequency scanning antenna with respect to an area to be illuminated by the radar. Furthermore, the control unit 14 is configured to divide the area into at least two angular sectors. In addition to this, the at least two angular sectors are configured in a manner that the at least two angular sectors overlap with respect to each other.

It is noted that it might be particularly advantageous if for steering the radar beam with the aid of the frequency scanning antenna, the control unit 14 is configured to vary the respective excitation frequency. It is further noted that the control unit 14 may preferably be configured to generate a raw data slice comprising the raw radar data on the basis of the at least two angular sectors.

With respect to said raw data slice, it is noted that the raw data slice may especially comprise or be a two-dimensional matrix. Additionally or alternatively, the raw data slice may represent a respective coherent processing interval. In further addition to this or as a further alternative, the raw data slice may comprise or be a slow-time and fast-time matrix. Furthermore, the control unit 14 may additionally or alternatively be configured to generate a raw data cube on the basis of the raw data slice especially by copying the raw data slice at least once and stacking the raw data slice and the at least one copy thereof together in order to form the raw data cube.

Moreover, it might be particularly advantageous if the control unit 14 is configured to generate a radar data cube on the basis of the raw data slice or the raw data cube especially by applying at least one window function and/or at least one frequency transform, preferably at least one Fast Fourier Transform, to the raw data slice or the raw data cube.

In addition to this or as an alternative, the control unit 14 may be configured to apply at least one angular window function to at least one, preferably each, of the at least two angular sectors especially such that the corresponding angular window function matching the respective angle of arrival of a corresponding radar target yields the strongest respective magnitude preferably in the raw radar data. In this context, it might be particularly advantageous if the control unit 14 is configured to derive the at least one angular window function from the corresponding radiation pattern of the frequency scanning antenna.

While various embodiments of the present invention have been described above, it should be understood that they have been presented by way of example only, and not limitation.

## Claims

1. A method for extracting spatial resolution and/or velocity resolution of a single-input single-output radar chirp signal acquiring raw radar data with a frequency scanning antenna (10), the method comprising the steps of:
steering a radar beam with the aid of the frequency scanning antenna with respect to an area to be illuminated by the radar,
dividing the area into at least two angular sectors, wherein the at least two angular sectors are configured in a manner that the at least two angular sectors overlap with respect to each other, and
generating a raw data slice (60) comprising the raw radar data on the basis of the at least two angular sectors, wherein with respect to the raw data slice (60), an angular window function and/or a frequency leakage window function are applied.

2. The method according to claim 1,
wherein for steering the radar beam with the aid of the frequency scanning antenna, the method comprises the step of varying the respective excitation frequency.

3. The method according to claim 1,
wherein the raw data slice (60) comprises or is a two-dimensional matrix, and/or
wherein the raw data slice (60) represents a respective coherent processing interval, and/or
wherein the raw data slice (60) comprises or is a slow-time and fast-time matrix.

4. The method according to any of the claims 1 to 3,
wherein the method comprises the step of generating a raw data cube (61) on the basis of the raw data slice (60) especially by copying the raw data slice (60) at least once and stacking the raw data slice (60) and the at least one copy thereof together in order to form the raw data cube (61).

5. The method according to any of the claims 1 to 4, wherein the method comprises the step of generating a radar data cube (62) on the basis of the raw data slice (60) or the raw data cube (61) especially by applying at least one window function and/or at least one frequency transform, preferably at least one Fast Fourier Transform, to the raw data slice (60) or the raw data cube (61).

6. The method according to any of the claims 1 to 5, wherein the method comprises the step of applying at least one angular window function to at least one, preferably each, of the at least two angular sectors especially such that the corresponding angular window function matching the respective angle of arrival of a corresponding radar target (11) yields the strongest respective magnitude preferably in the raw radar data.

7. The method according to claim 6,
wherein the method comprises the step of deriving the at least one angular window function from the corresponding radiation pattern of the frequency scanning antenna.

8. A device (12) for extracting spatial resolution and/or velocity resolution of a single-input single-output radar chirp signal acquiring raw radar data with a frequency scanning antenna (10), the device (12) comprising:
an interface (13) being connectable to the single-input single-output radar with the frequency scanning antenna (10), and
a control unit (14) connected to the interface (13), wherein the control unit (14) is configured to steer a radar beam with the aid of the frequency scanning antenna with respect to an area to be illuminated by the radar,
wherein the control unit is configured to divide the area into at least two angular sectors,
wherein the at least two angular sectors are configured in a manner that the at least two angular sectors overlap with respect to each other,
wherein the control unit (14) is configured to generate a raw data slice (60) comprising the raw radar data on the basis of the at least two angular sectors, and
wherein with respect to the raw data slice (60), an angular window function and/or a frequency leakage window function are applied.

9. The device (12) according to claim 8,
wherein for steering the radar beam with the aid of the frequency scanning antenna, the control unit (14) is configured to vary the respective excitation frequency.

10. The device (12) according to claim 8,
wherein the raw data slice (60) comprises or is a two-dimensional matrix, and/or
wherein the raw data slice (60) represents a respective coherent processing interval, and/or
wherein the raw data slice (60) comprises or is a slow-time and fast-time matrix.

11. The device (12) according to any of the claims 8 to 10, wherein the control unit (14) is configured to generate a raw data cube (61) on the basis of the raw data slice (60) especially by copying the raw data slice (60) at least once and stacking the raw data slice (60) and the at least one copy thereof together in order to form the raw data cube (61).

12. The device (12) according to any of the claims 8 to 11, wherein the control unit (14) is configured to generate a radar data cube (62) on the basis of the raw data slice (60) or the raw data cube (61) especially by applying at least one window function and/or at least one frequency transform, preferably at least one Fast Fourier Transform, to the raw data slice (60) or the raw data cube (61).

13. The device (12) according to any of the claims 8 to 12, wherein the control unit (14) is configured to apply at least one angular window function to at least one, preferably each, of the at least two angular sectors especially such that the corresponding angular window function matching the respective angle of arrival of a corresponding radar target (11) yields the strongest respective magnitude preferably in the raw radar data.

## Patentansprüche

1. Verfahren zur Extraktion einer räumlichen Auflösung und/oder Geschwindigkeitsauflösung eines Single-Input-Single-Output-Radar-Chirp-Signals, das Radarrohdaten mit einer Frequenzabtastantenne (10) erfasst, wobei das Verfahren die folgenden Schritte umfasst:
Lenken eines Radarstrahls mithilfe der Frequenzabtastantenne in Bezug auf eine vom Radar zu beleuchtende Fläche,
Teilen der Fläche in mindestens zwei Winkelsektoren, wobei die mindestens zwei Winkelsektoren so ausgelegt sind, dass sich die mindestens zwei Winkelsektoren in Bezug aufeinander überlappen, und
Erzeugen eines Rohdaten-Slices (60), der die Radarrohdaten umfasst, auf der Basis der mindestens zwei Winkelsektoren, wobei in Bezug auf den Rohdaten-Slice (60) eine Winkelfensterfunktion und/oder eine Frequenzleck-Fensterfunktion angewendet werden.

2. Verfahren nach Anspruch 1,
wobei zum Lenken des Radarstrahls mithilfe der Frequenzabtastantenne das Verfahren den Schritt des Variierens der jeweiligen Erregerfrequenz umfasst.

3. Verfahren nach Anspruch 1,
wobei der Rohdaten-Slice (60) eine zweidimensionale Matrix umfasst oder ist, und/oder
wobei der Rohdaten-Slice (60) ein jeweiliges kohärentes Verarbeitungsintervall darstellt, und/oder
wobei der Rohdaten-Slice (60) eine Slow-Time- und Fast-Time-Matrix umfasst oder ist.

4. Verfahren nach einem der Ansprüche 1 bis 3,
wobei das Verfahren den Schritt des Erzeugens eines Rohdatenwürfels (61) auf der Basis des Rohdaten-Slices (60) umfasst, indem insbesondere der Rohdaten-Slice (60) mindestens einmal kopiert wird und der Rohdaten-Slice (60) und die mindestens eine Kopie davon miteinander gestapelt werden, um den Rohdatenwürfel (61) zu bilden.

5. Verfahren nach einem der Ansprüche 1 bis 4,
wobei das Verfahren den Schritt des Erzeugens eines Radardatenwürfels (62) auf der Basis des Rohdaten-Slices (60) oder des Rohdatenwürfels (61) umfasst, indem insbesondere mindestens eine Fensterfunktion und/oder mindestens eine Frequenztransformation, vorzugsweise mindestens eine Fast Fourier-Transformation, auf den Rohdaten-Slice (60) oder den Rohdatenwürfel (61) angewendet werden.

6. Verfahren nach einem der Ansprüche 1 bis 5,
wobei das Verfahren den Schritt des Anwendens mindestens einer Winkelfensterfunktion auf mindestens einen, vorzugsweise jeden, der mindestens zwei Winkelsektoren umfasst, insbesondere derart, dass die entsprechende Winkelfensterfunktion, die mit dem jeweiligen Einfallswinkel eines entsprechenden Radarziels (11) übereinstimmt, den höchsten jeweiligen Betrag vorzugsweise in den Radarrohdaten ergibt.

7. Verfahren nach Anspruch 6,
wobei das Verfahren den Schritt des Ableitens der mindestens einen Winkelfensterfunktion aus dem entsprechenden Strahlungsmuster der Frequenzabtastantenne umfasst.

8. Vorrichtung (12) zum Extrahieren einer räumlichen Auflösung und/oder Geschwindigkeitsauflösung eines Single-Input-Single-Output-Radar-Chirp-Signals, das Radarrohdaten mit einer Frequenzabtastantenne (10) erfasst, wobei die Vorrichtung (12) Folgendes umfasst:
eine Schnittstelle (13), die mit der Frequenzabtastantenne (10) mit dem Single-Input-Single-Output-Radar verbindbar ist, und
eine Steuereinheit (14), die mit der Schnittstelle (13) verbunden ist,
wobei die Steuereinheit (14) dazu ausgelegt ist, einen Radarstrahl mithilfe der Frequenzabtastantenne in Bezug auf eine vom Radar zu beleuchtende Fläche zu lenken,
wobei die Steuereinheit dazu ausgelegt ist, die Fläche in mindestens zwei Winkelsektoren zu teilen,
wobei die mindestens zwei Winkelsektoren so ausgelegt sind, dass sich die mindestens zwei Winkelsektoren in Bezug aufeinander überlappen,
wobei die Steuereinheit (14) dazu ausgelegt ist, einen Rohdaten-Slice (60), der die Radarrohdaten umfasst, auf der Basis der mindestens zwei Winkelsektoren zu erzeugen, und
wobei in Bezug auf den Rohdaten-Slice (60) eine Winkelfensterfunktion und/oder eine Frequenzleck-Fensterfunktion angewendet werden.

9. Vorrichtung (12) nach Anspruch 8,
wobei zum Lenken des Radarstrahls mithilfe der Frequenzabtastantenne die Steuereinheit (14) dazu ausgelegt ist, die jeweilige Erregerfrequenz zu variieren.

10. Vorrichtung (12) nach Anspruch 8,
wobei der Rohdaten-Slice (60) eine zweidimensionale Matrix umfasst oder ist, und/oder
wobei der Rohdaten-Slice (60) ein jeweiliges kohärentes Verarbeitungsintervall darstellt, und/oder
wobei der Rohdaten-Slice (60) eine Slow-Time- und Fast-Time-Matrix umfasst oder ist.

11. Vorrichtung (12) nach einem der Ansprüche 8 bis 10, wobei die Steuereinheit (14) dazu ausgelegt ist, einen Rohdatenwürfel (61) auf der Basis des Rohdaten-Slices (60) zu erzeugen, indem sie insbesondere den Rohdaten-Slice (60) mindestens einmal kopiert und den Rohdaten-Slice (60) und die mindestens eine Kopie davon miteinander stapelt, um den Rohdatenwürfel (61) zu bilden.

12. Vorrichtung (12) nach einem der Ansprüche 8 bis 11, wobei die Steuereinheit (14) dazu ausgelegt ist, einen Radardatenwürfel (62) auf der Basis des Rohdaten-Slices (60) oder des Rohdatenwürfels (61) zu erzeugen, indem sie insbesondere mindestens eine Fensterfunktion und/oder mindestens eine Frequenztransformation, vorzugsweise mindestens eine Fast Fourier-Transformation, auf den Rohdaten-Slice (60) oder den Rohdatenwürfel (61) anwendet.

13. Vorrichtung (12) nach einem der Ansprüche 8 bis 12, wobei die Steuereinheit (14) dazu ausgelegt ist, mindestens eine Winkelfensterfunktion auf mindestens einen, vorzugsweise jeden, der mindestens zwei Winkelsektoren anzuwenden, insbesondere derart, dass die entsprechende Winkelfensterfunktion, die mit dem jeweiligen Einfallswinkel eines entsprechenden Radarziels (11) übereinstimmt, den höchsten jeweiligen Betrag vorzugsweise in den Radarrohdaten ergibt.

## Revendications

1. Procédé d'extraction de résolution spatiale et/ou de résolution en vitesse d'un signal de chirp radar à entrée unique et sortie unique acquérant des données radar brutes au moyen d'une antenne à balayage de fréquence (10), le procédé comprenant les étapes suivantes :
orienter un faisceau radar à l'aide de l'antenne à balayage fréquentiel par rapport à une zone à éclairer par le radar,
diviser la zone en au moins deux secteurs angulaires, les au moins deux secteurs angulaires étant configurés de manière à ce que les au moins deux secteurs angulaires se chevauchent l'un par rapport à l'autre, et
générer une tranche de données brutes (60) comprenant les données radar brutes sur la base des au moins deux secteurs angulaires, où, une fonction de fenêtre angulaire et/ou une fonction de fenêtre de fuite de fréquence sont appliquées par rapport à la tranche de données brutes (60).

2. Procédé selon la revendication 1,
dans lequel pour orienter le faisceau radar à l'aide de l'antenne à balayage fréquentiel, le procédé comprend l'étape comprenant de faire varier la fréquence d'excitation respective.

3. Procédé selon la revendication 1,
dans lequel la tranche de données brutes (60) comprend ou est une matrice bidimensionnelle, et/ou dans lequel la tranche de données brutes (60) représente un intervalle de traitement cohérent respectif, et/ou dans lequel la tranche de données brutes (60) comprend ou est une matrice temps lent et temps rapide.

4. Procédé selon l'une quelconque des revendications 1 à 3,
le procédé comprenant l'étape comprenant de générer un cube de données brutes (61) sur la base de la tranche de données brutes (60), en particulier en copiant la tranche de données brutes (60) au moins une fois et en empilant la tranche de données brutes (60) et l'au moins une copie de celle-ci afin de former le cube de données brutes (61).

5. Procédé selon l'une quelconque des revendications 1 à 4,
le procédé comprenant l'étape comprenant de générer un cube de données radar (62) sur la base de la tranche de données brutes (60) ou du cube de données brutes (61), en particulier en appliquant au moins une fonction fenêtre et/ou au moins une transformée de fréquence, de préférence au moins une transformée de Fourier rapide, à la tranche de données brutes (60) ou au cube de données brutes (61).

6. Procédé selon l'une quelconque des revendications 1 à 5,
le procédé comprenant l'étape comprenant d'appliquer au moins une fonction de fenêtre angulaire à au moins un, de préférence à chacun, des au moins deux secteurs angulaires, de sorte que la fonction de fenêtre angulaire correspondante correspondant à l'angle d'arrivée respectif d'une cible radar correspondante (11) donne la grandeur respective la plus forte, de préférence dans les données radar brutes.

7. Procédé selon la revendication 6,
le procédé comprenant l'étape comprenant de dériver l'au moins une fonction de fenêtre angulaire du diagramme de rayonnement correspondant de l'antenne à balayage de fréquence.

8. Dispositif (12) d'extraction de résolution spatiale et/ou de résolution en vitesse d'un signal de chirp radar à entrée unique et sortie unique acquérant des données radar brutes au moyen d'une antenne à balayage de fréquence (10), le dispositif (12) comprenant :
une interface (13) pouvant être connectée au radar à entrée unique et sortie unique avec l'antenne de balayage fréquentiel (10), et
une unité de commande (14) connectée à l'interface (13), où l'unité de commande (14) est configurée pour orienter un faisceau radar à l'aide de l'antenne à balayage fréquentiel par rapport à une zone à éclairer par le radar,
où l'unité de commande est configurée pour diviser la zone en au moins deux secteurs angulaires,
où les au moins deux secteurs angulaires sont configurés de manière à ce que les au moins deux secteurs angulaires se chevauchent l'un par rapport à l'autre,
où l'unité de commande (14) est configurée pour générer une tranche de données brutes (60) comprenant les données radar brutes sur la base des au moins deux secteurs angulaires, et
où, par rapport à la tranche de données brutes (60), une fonction de fenêtre angulaire et/ou une fonction de fenêtre de fuite de fréquence sont appliquées.

9. Dispositif (12) selon la revendication 8,
dans lequel, pour piloter le faisceau radar à l'aide de l'antenne à balayage fréquentiel, l'unité de commande (14) est configurée pour faire varier la fréquence d'excitation respective.

10. Dispositif (12) selon la revendication 8,
dans lequel la tranche de données brutes (60) comprend ou est une matrice bidimensionnelle, et/ou dans lequel la tranche de données brutes (60) représente un intervalle de traitement cohérent respectif, et/ou dans lequel la tranche de données brutes (60) comprend ou est une matrice temps lent et temps rapide.

11. Dispositif (12) selon l'une quelconque des revendications 8 à 10,
dans lequel l'unité de commande (14) est configurée pour générer un cube de données brutes (61) sur la base de la tranche de données brutes (60), en particulier en copiant la tranche de données brutes (60) au moins une fois et en empilant la tranche de données brutes (60) et l'au moins une copie de celle-ci afin de former le cube de données brutes (61).

12. Dispositif (12) selon l'une quelconque des revendications 8 à 11,
dans lequel l'unité de commande (14) est configurée pour générer un cube de données radar (62) sur la base de la tranche de données brutes (60) ou du cube de données brutes (61), en particulier en appliquant au moins une fonction fenêtre et/ou au moins une transformée de fréquence, de préférence au moins une transformée de Fourier rapide, à la tranche de données brutes (60) ou au cube de données brutes (61).

13. Dispositif (12) selon l'une quelconque des revendications 8 à 12,
l'unité de commande (14) étant configurée pour appliquer au moins une fonction de fenêtre angulaire à au moins un, de préférence à chacun, des au moins deux secteurs angulaires, de sorte que la fonction de fenêtre angulaire correspondante correspondant à l'angle d'arrivée respectif d'une cible radar correspondante (11) donne la grandeur respective la plus forte, de préférence dans les données radar brutes.
